# EUROPÄISCHE PATENTSCHRIFT

(11) **EP 3 390 788 B1**
(45) Veröffentlichungstag und Bekanntmachung des Hinweises auf die Patenterteilung: **17.06.2020**
(21) Anmeldenummer: 16809806.9
(22) Anmeldetag: 13.12.2016
(51) Int. Cl.: F01N 3/20, B60K 15/073

(54) **TANKSYSTEM FÜR EIN REDUKTIONSMITTEL**
TANK SYSTEM FOR A REDUCING AGENT
SYSTÈME DE STOCKAGE D'UN AGENT DE RÉDUCTION

(30) Priorität: 18.12.2015 DE 102015226118
(43) Veröffentlichungstag der Anmeldung: 24.10.2018
(73) Patentinhaber: Vitesco Technologies GmbH, 30165 Hannover (DE)
(72) Erfinder: BRÜCK, Rolf, 51429 Bergisch Gladbach (DE)
(86) Internationale Anmeldenummer: PCT/EP2016/080711
(87) Internationale Veröffentlichungsnummer: WO 2017/102672

(56) Entgegenhaltungen:
- WO-A1-98/41415
- DE-A1-102008 054 803
- DE-A1-102009 002 209
- DE-A1-102009 047 101
- DE-A1-102013 109 805

## Beschreibung

Gegenstand der Erfindung ist ein Tanksystem für ein Reduktionsmittel, umfassend einen Behälter für das Reduktionsmittel mit einer oberen Behälterwandung, seitlichen Behälterwandungen und einer unteren Behälterwandung, eine Fördervorrichtung, um das Reduktionsmittel anzusaugen und unter Druck über einen Auslass einem Abgas zuführbar bereitzustellen.

Es ist bekannt, Reduktionsmittel den Abgasen von Kraftfahrzeugen zuzugeben, um unerwünschte Bestandteile des Abgases, insbesondere Stickoxidverbindungen, zu reduzieren, indem sie in andere Verbindungen, wie Stickstoff, Wasser und Kohlendioxid umgewandelt werden. Als Reduktionsmittel wird hierbei Harnstofflösung verwendet, die auch unter dem Handelsnamen AdBlue erhältlich ist. Für die Bereitstellung und Bevorratung der Harnstofflösung ist in Kraftfahrzeugen ein Behälter aus Kunststoff vorgesehen. Dieser ist mit einer Fördervorrichtung verbunden. Die Fördervorrichtung besteht aus einer Pumpe, die das Reduktionsmittel ansaugt und unter Druck in eine Förderleitung abgibt. Über die Förderleitung gelangt die Harnstofflösung zu einer Einspritzvorrichtung, welche die Harnstofflösung in eine Abgasleitung und das darin strömende Abgas einspritzt. Die Fördervorrichtung weist weitere Komponenten, wie Füllstandsgeber, Sensoren, Filter und Heizvorrichtungen auf, die für den sicheren und zuverlässigen Betrieb des Tanksystems vorgesehen sind.

Es ist weiter bekannt, im Behälter eine Öffnung einzubringen, um die Fördervorrichtung im Innern des Behälters anzuordnen. Mittels eines Flansches ist die Öffnung im Behälter verschließbar. Über einen in den Flansch integrierten Auslass wird die von der Fördervorrichtung geförderte Harnstofflösung aus dem Behälter heraus und zur Abgasleitung geführt. Nachteilig ist, dass bei einer Anordnung der Fördervorrichtung durch eine Öffnung im Boden des Behälters eine vollständige Entleerung des Behälters nicht möglich ist. Selbst wenn die Fördervorrichtung bis auf wenige Millimeter Füllstandhöhe im Behälter diesen entleeren kann, verbleibt aufgrund der Bodenfläche ein erhebliches, nicht förderbares Restvolumen im Behälter.

Es ist weiter bekannt, dass die Harnstofflösung bei ca. -11 °C einfriert. Um die Bereitstellung des Reduktionsmittels unter allen Betriebszuständen zu gewährleisten, ist es ebenfalls bekannt, eine Heizvorrichtung vorzusehen. Dabei ist es das Bestreben, die Heizvorrichtung möglichst so klein zu dimensionieren, um den Energieverbrauch so gering wie möglich zu halten aber dennoch eine ausreichende Erwärmung der Harnstofflösung zu ermöglichen. Dabei spielt das Einfrierverhalten des Reduktionsmittels im Behälter eine entscheidende Rolle. Grundsätzlich ist davon auszugehen, dass die außenliegenden Bereiche zuerst und als letztes der zentral im Innern des Behälters liegende Bereich einfriert. Besonders kritisch ist dabei, dass das gefrorene Reduktionsmittel ein deutlich größeres Volumen beansprucht als flüssiges Reduktionsmittel. Das hat zur Folge, dass zuletzt einfrierendes Reduktionsmittel oder aber in abgetrennten Volumen befindliches Reduktionsmittel beim Einfrieren in seiner Volumenausdehnung behindert wird. Dadurch entstehen teils massive Spannungen, die zu Beschädigungen, insbesondere an der Fördervorrichtung führen. Dem wird bislang durch eine entsprechende Anordnung und Ausbildung der Heizvorrichtung entgegengewirkt, was den Aufwand für das Tanksystem erheblich erhöht.

Die DE 10 2013 109 805 A1 offenbart eine Vorrichtung zur Bereitstellung eines flüssigen Additivs für die Abgasreinigung, welche zumindest einen Kanal zur Leitung des flüssigen Additivs mit einer Kanalwand aufweist. Wobei in den Kanal ein Einlegebauteil eingesetzt ist, welches sich zumindest abschnittsweise entlang des Kanals (3) erstreckt, wobei das Einlegebauteil aus einem Vollmaterial besteht.

Die WO 98/41415 A1 offenbart eine Anordnung zum Entlüften von Kraftstofftanks in Bussen, wobei mindestens zwei Kraftstofftanks auf beiden Seiten der Mittellinie des Fahrzeugs angeordnet sind, wobei eine Entlüftungsleitung zwischen den Tanks angeordnet ist. Dabei ist die Entlüftungsleitung in einem Stützrohr untergebracht, das sich durch den Fahrzeuginnenraum erstreckt. Dies ermöglicht es, dass sich die Entlüftungsleitung an einem geschützten Ort befindet und die Tanks an relativ hohen Positionen im Bus, zum Beispiel in seinen Radkästen, angeordnet werden können.

Der Erfindung liegt daher die Aufgabe zugrunde, ein Tanksystem der eingangs genannten Art zu schaffen, welches sowohl eine nahezu vollständige Entleerung des Behälters ermöglicht, darüber hinaus soll eine mögliche Fördervorrichtung mit geringem Aufwand gegen Beschädigungen infolge gefrierenden Reduktionsmittels geschützt sein.

Die Aufgabe wird mit den Merkmalen des unabhängigen Anspruchs gelöst. Vorteilhafte Ausgestaltungen sind in den abhängigen Ansprüchen beschrieben.

Das erfindungsgemäße Tanksystem zeichnet sich dadurch aus, dass in der unteren Behälterwandung zumindest eine Öffnung angeordnet ist, dass die zumindest eine Öffnung eine Verbindung zu einem weiteren mit Reduktionsmittel gefülltem Volumen bildet und dass zumindest eine Öffnung am Umfang angeordnete und nach radial innen gerichtete elastische Elemente aufweist.

Die Anordnung zumindest einer Öffnung in der unteren Behälterwandung ermöglicht ein Überströmen des Reduktionsmittels aus dem Innern des Behälters in das weitere Volumen. Von dort kann es mit Hilfe der zur Fördervorrichtung gehörenden Pumpe dem Abgas zugeführt werden. Mit der Anordnung des Volumens lässt sich daher der Behälter nahezu vollständig entleeren. Beim Einfrieren des im Volumen befindlichen Reduktionsmittels stößt dieses aufgrund seiner Volumenvergrößerung an die Begrenzungen des Volumens. Während die Begrenzungen des Volumens die weitere Ausdehnung behindern, kann sich das gefrierende Reduktionsmittel an zumindest dieser Öffnung weiter ausdehnen, indem es die am Umfang der Öffnung angeordneten Elemente elastisch verformt. Mit der auf diese Weise ermöglichten Volumenvergrößerung des Reduktionsmittels werden Spannungen soweit reduziert, dass Beschädigungen im Volumen oder im Behälter vermieden werden. Eine gegebenenfalls erforderliche Heizvorrichtung kann dadurch deutlich kleiner dimensioniert werden. Das erfindungsgemäße Tanksystem erfordert einen wesentlich geringeren Aufwand.

Die elastischen Elemente haben zudem zur Folge, dass sie die Querschnittsfläche der Öffnung verringern, so dass diese Öffnungen einen deutlich größeren Umfang haben müssen, wenn sie die gleiche Querschnittsfläche wie eine Öffnung ohne solche Elemente aufweisen sollen. Mit dem vergrößerten Umfang erstrecken sich Öffnungen mit solchen Elementen über einen deutlich größeren Bereich der Behälterwandung, so dass letztendlich größere Bereiche der Behälterwandung vor den kritischen Spannungen geschützt sind.

Der Aufwand zur Erzeugung der Öffnungen im Behälter lässt sich reduzieren, wenn nicht alle Öffnungen mit elastisch verformbaren Elementen ausgebildet sind. Gemäß einer vorteilhaften Ausgestaltung ist die zumindest eine Öffnung, die näher zum Zentrum des Behälters angeordnete ist, eine Öffnung mit den derartigen Elementen.

Die Elemente lassen sich gemäß einer weiteren Ausgestaltung bei Kunststoffbehältern, besonders einfach erzeugen, wenn sie einteilig mit der Behälterwandung ausgebildet sind. Insbesondere bei aus mindestens zwei Halbschalen bestehenden Spritzgussbehältern lassen sich die Elemente während des Spritzgießens mit den jeweiligen Behälterschalen erzeugen.

Im einfachsten Fall besitzen die Elemente die gleiche Dicke wie die Behälterwandung. Die Formwerkzeuge für die Herstellung gestalten sich dadurch einfach.

Die Elastizität der Elemente lässt sich gemäß einer anderen vorteilhaften Ausgestaltung auch dadurch erhöhen, dass die Elemente eine geringere Dicke als die Behälterwandung besitzen.

Um ein ausreichendes Überströmen des Reduktionsmittels aus dem Innern des Behälters in das Volumen zu ermöglich hat es sich als vorteilhaft heraus gestellt, dass die Elemente entlang des Durchmessers der Öffnung eine Länge von 0,2 bis 0,9, vorzugsweise 0,4 bis 0,7 des Durchmessers besitzen. Da der Aufwand bei der Herstellung des Behälters mit Anzahl und Größe der Öffnungen steigt, sollen diese möglichst klein gestaltet sein. Zur Vermeidung von Spannungen beim Gefrieren des Reduktionsmittels sind dagegen große Öffnungen vorteilhaft. Unter Berücksichtigung solcher Randbedingungen besitzen große Öffnungen Elemente mit einer Länge bis zu 0,5 des Durchmessers und kleine Öffnungen Elemente mit einer Länge bis zu 0,9 des Durchmessers.

Für die entsprechende Verformbarkeit sind die Elemente nach einer weiteren Ausgestaltung mit Abstand zueinander angeordnet. Die Abstände sind dabei in Abhängigkeit der Form der Elemente über die Länge der Elemente gleichbleibend oder sich vergrößernd oder verkleinernd ausgebildet. Die Elemente können als Dreieck, Trapez, Rechteck oder Parallelogramm ausgebildet sein. Ebenso sind Formen mit runden Begrenzungen denkbar.

In Abhängigkeit der Größe der Öffnung und des notwendigen Strömungsquerschnitts kann die Breite des Abstands zwischen zwei Elementen gemäß einer vorteilhaften Ausgestaltung zwischen 1,0 und 0,05 der Breite eines Elements betragen.

Die Elastizität der Elemente lässt sich auch dadurch vergrö-ßern, dass der Abstand zwischen zwei Elementen im Bereich des Umfangs der Öffnung größer als der sich unmittelbar daran anschließende Bereich des Abstandes ist. Gleichzeitig lässt sich mit dieser Gestaltung die freie Durchströmfläche radial außen deutlich erhöhen. Dies wirkt sich positiv beim Auftauen des Reduktionsmittels aus, da die Erwärmung über das Reduktionsmittel besser als durch die Behälterwandung ist.

Um eine Verformbarkeit der Behälterwandung infolge der Volumenausdehnung gefrierenden Reduktionsmittels zu ermöglichen, ist mindestens ein Element erforderlich. Bei mehr als zehn Elementen steigt wiederum der Aufwand in der Herstellung, ohne dass sich die bereits deutlich reduzierten Spannungen noch wesentlich weiter reduzieren ließen.

An mehreren Ausführungsbeispielen wird die Erfindung näher erläutert. Es zeigen
- Fig. 1:: eine schematische Darstellung des erfindungsgemäßen Tanksystems,
- Fig. 2 - 8:: verschiedene Öffnungen im Behälter,
- Fig. 9 - 10b:: weitere Ausführungen des Tanksystems.

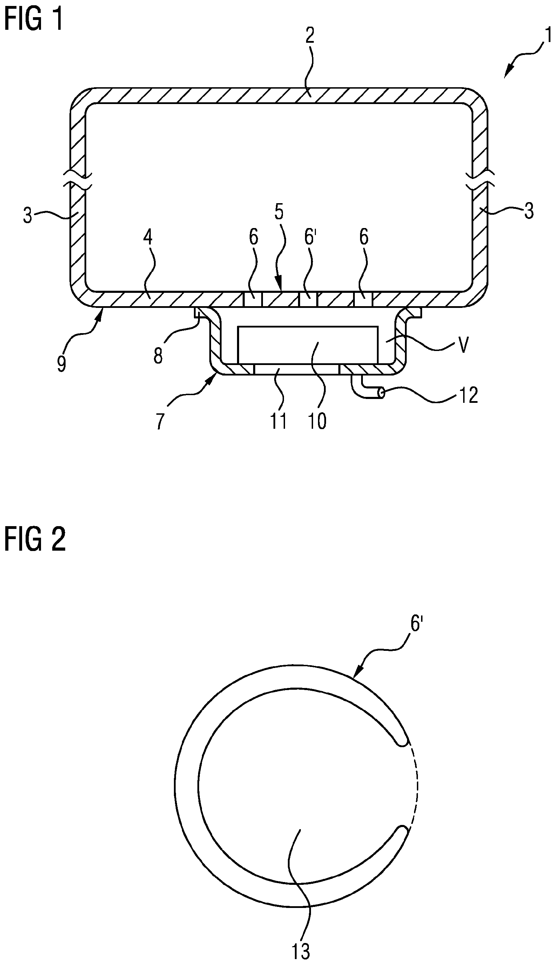

Figur 1 zeigt ein Tanksystem mit einem Behälter 1, der in Einbaulage eine obere Behälterwandung 2, einen nicht dargestellten Einfüllabschnitt für das Reduktionsmittel, seitliche Behälterwandungen 3 und eine untere Behälterwandung 4 besitzt. Die untere Behälterwandung 4 bildet den Boden des Behälters 1. Der Behälter 1 besteht aus Kunststoff. In einem ebenen Bodenbereich 5 der unteren Behälterwandung 4 sind Öffnungen 6 angeordnet. Außerhalb des Behälters 1 befindet sich eine Fördervorrichtung 7. Die Fördervorrichtung 7 besitzt einen sie umgebenden Flansch 8, der mit der Außenseite 9 des Behälters 1 verschweißt ist. Die Fördervorrichtung 7 umschließt zusammen mit der Außenseite 9 des Behälters 1 einen Raum, so dass Fördervorrichtung 7 und Außenseite 9 einen Volumen V bilden. Der Behälter 1 wird somit nicht von der Fördervorrichtung 7 durchdrungen. Durch die Öffnungen 6 in der unteren Behälterwandung 4 ist das Volumen V mit dem Inneren des Behälters 1 verbunden. Dadurch kann im Innern des Behälters gelagerte Harnstofflösung durch die Behälterwandung 4 nach außen in das Volumen V fließen. Die Fördervorrichtung 7 besitzt ein Gehäuse 10, in oder an dem verschiedene nicht weiter dargestellte Komponenten, z. B. eine Pumpe, Druckregler, Heizvorrichtungen, Filter, Füllstands- und Qualitätssensoren angeordnet sein können. Das Gehäuse 10 umfasst weiter einen Deckel 11, der das Gehäuse 10 verschließt. Mittels der Pumpe kann die im Volumen V befindliche Harnstofflösung angesaugt und über einen Auslass 12 unter Druck in eine Förderleitung einer Abgasleitung zugeführt werden, in der die Harnstofflösung dem Abgas beigemischt wird. Aufgrund der exponierten Lage der Fördervorrichtung 7 an der Außenseite des Behälters 1 ist das Volumen V anfälliger für Temperatureinwirkungen. Insbesondere bei tiefen Temperaturen friert das Volumen V vor dem angrenzenden Volumen im Innern des Behälters 1 ein. Die damit einhergehende Volumenvergrößerung im Volumen V führt dazu, dass sich das Volumen V aufgrund der beiden äußeren Öffnungen 6 in Richtung der Behälters 1 ausdehnen kann, wodurch kritische Spannungen im Volumen V und damit in der Fördervorrichtung vermieden werden. Im Bereich der zentralen Öffnung 6', welche näher zum Zentrum des Behälters 1 angeordnet ist, friert die Harnstofflösung, bezogen auf das Volumen V zuletzt ein und würde gegen die Außenseite 9 der Behälterwandung 4 im Bodenbereich 5 drücken. Die erfindungsgemäße Ausgestaltung der Öffnung 6' verhindert dies, wobei die Ausbildung der Öffnung 6' in den nachfolgenden Figuren beschrieben wird.

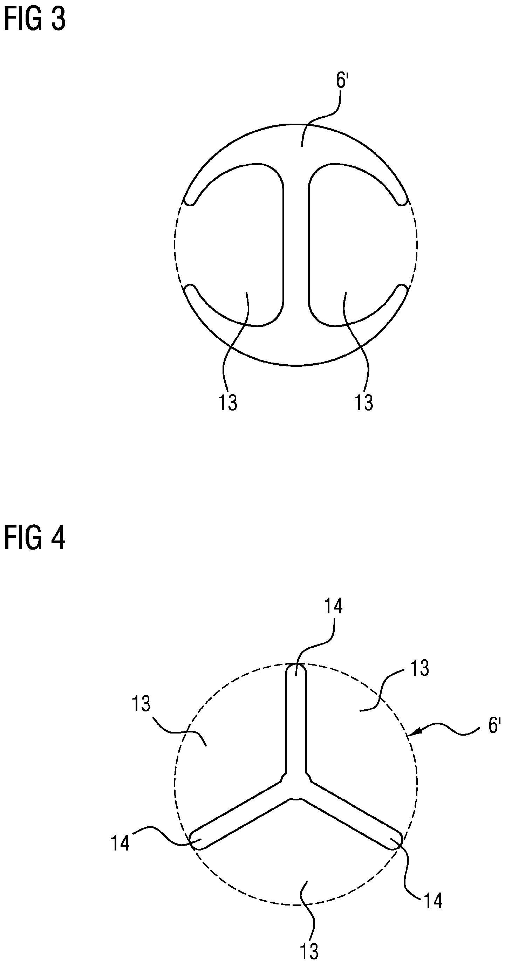

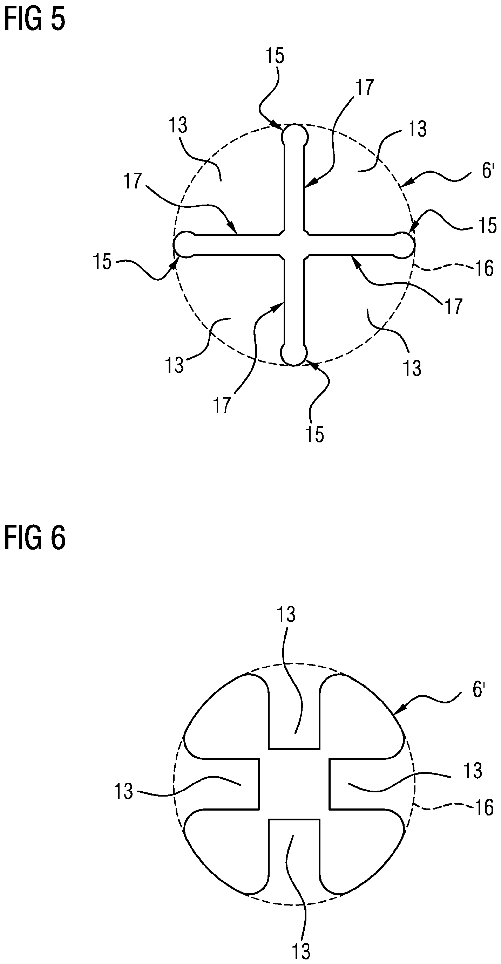

Figur 2 zeigt eine Öffnung 6' mit einem Element 13, welches ein Länge von 0,8 des Durchmessers der Öffnung 6' besitzt. Eine Öffnung 6' mit zwei elastisch verformbaren Elementen 13 zeigt Figur 3. Drei elastische Elemente 13 sind in Figur 4 dargestellt. Die trapezförmigen Elemente 13 sind zueinander beabstandet angeordnet, wobei die Abstände als Schlitze 14 ausgebildet sind, die parallel verlaufende Begrenzungen besitzen. In Figur 5 sind vier Elemente 13 in einer Öffnung 6' angeordnet. Der Abstand zwischen zwei Elementen 13 im Bereich 15 des Umfangs 16 der Öffnung 6' ist größer als der sich unmittelbar daran anschließende Bereich 17.

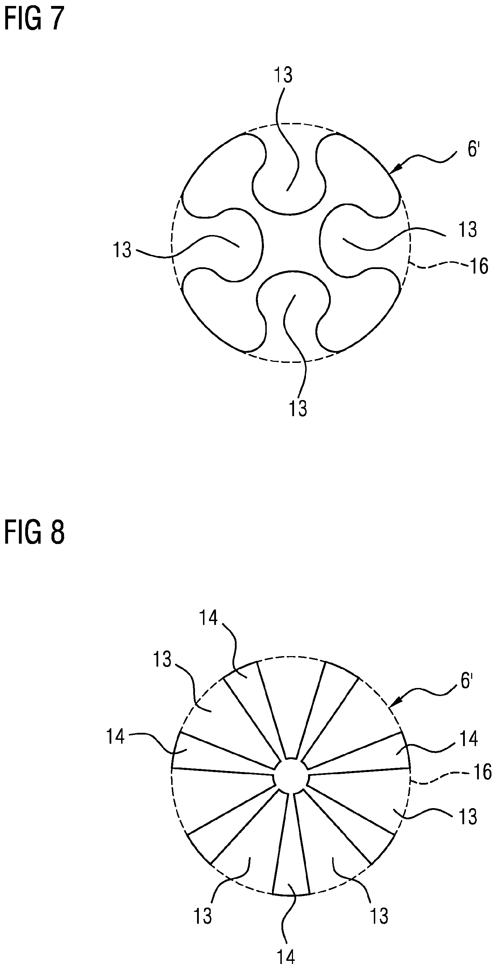

Die Figuren 6 bis 8 zeigen weitere Ausgestaltungen der Elemente 13.

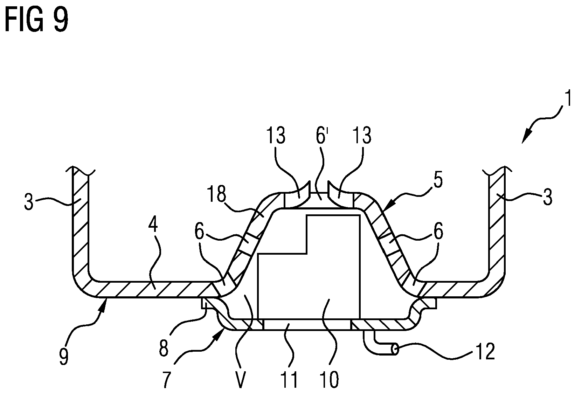

Der Behälter in Figur 9 weist einen ähnlichen Aufbau wie in Figur 1 auf. Der Bodenbereich 5 ist als in Innere des Behälters 1 gerichtete Einstülpung 18 ausgebildet. Aufgrund dieser Einstülpung 18 ist das Volumen des Behälters 1 kleiner als bei einer ebenen Ausgestaltung des Bodenbereichs 5 wie in Figur 1. An der Außenseite 9 des Behälters 1 ist im Bodenbereich 5 die Fördervorrichtung 7 angeordnet, deren Flansch 8 mit der Außenseite 9 verschweißt ist, so dass Fördervorrichtung 7 und Außenseite 9 des Behälters 1 das Volumen V bilden. Die Verbindung des Raumes S mit dem Innern des Behälters erfolgt über Öffnungen 6, die über die Einstülpung 18 verteilt angeordnet sind. Aufgrund dieser Verteilung sind die Öffnungen 6, 6' in verschiedenen Abständen zur unteren Behälterwandung 4 angeordnet. Das Gehäuse 10 mit den darin angeordneten Komponenten erstreckt sich in Richtung des Behälters 1, und ragt somit in den von der Einstülpung 13 ausgenommen Bereich hinein. Damit benötigt das Tanksystem nach unten weniger Bauraum. Die Fördervorrichtung 7 ist dabei wie in Figur 1 weiterhin vollständig außerhalb des Behälters 1 angeordnet. Für eine einfachere Herstellung des Behälters 1 infolge einer besseren Entformbarkeit ist die Einstülpung 13 konisch ausgebildet. Die Öffnung 6' ist hierbei zentral in der Einstülpung 18 angeordnet. Die Elemente 18 nach Figur 4 sind im elastisch verformten Zustand dargestellt.

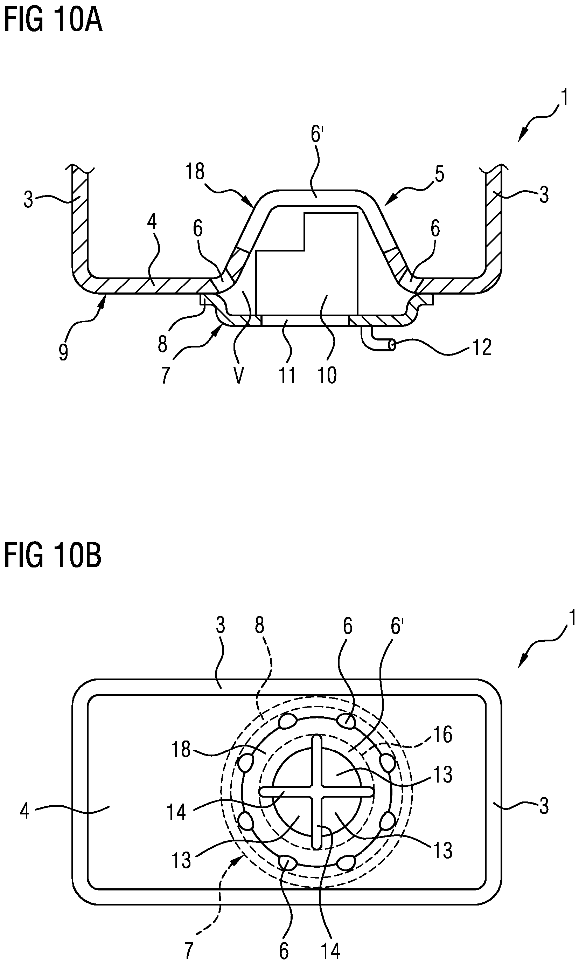

Die Figuren 10a, 10b zeigt eine weitere Ausführungsform mit einer deutlich größeren Öffnung 6', wobei Figur 10a einen Schnitt nach Figur 9 und Figur 10b eine Draufsicht auf Figur 10a zeigt. Hierbei ist zu erkennen, dass sich die Schlitze 14vom oberen, ebenen Bereich bis in den konisch ausgebildeten Bereich der Einstülpung 18 erstrecken.

## Patentansprüche

1. Tanksystem für ein Reduktionsmittel, umfassend einen Behälter (1) für das Reduktionsmittel mit einer oberen Behälterwandung (2), seitlichen Behälterwandungen (3) und einer unteren Behälterwandung (4), eine Fördervorrichtung (7), um das Reduktionsmittel unter Druck über einen Auslass (12) einem Abgas zuführbar bereitzustellen, wobei in der unteren Behälterwandung (4) zumindest eine Öffnung (6, 6') angeordnet ist, dass die zumindest eine Öffnung (6, 6') eine Verbindung zu einem weiteren mit Reduktionsmittel gefülltem Volumen (V) bildet, **dadurch gekennzeichnet, dass** zumindest eine Öffnung (6') am Umfang (16) angeordnete und nach radial innen gerichtete elastische Elemente (13) aufweist.

2. Tanksystem nach Anspruch 1, **dadurch gekennzeichnet, dass** die zumindest eine Öffnung (6') eine näher zum Zentrum des Behälters (1) angeordnete Öffnung (6') ist.

3. Tanksystem nach Anspruch 1 oder 2, **dadurch gekennzeichnet, dass** die Elemente (13) einteilig mit der Behälterwandung (4) ausgebildet sind.

4. Tanksystem nach mindestens einem der vorhergehenden Ansprüche, **dadurch gekennzeichnet, dass** die Elemente (13) die gleiche Dicke als die Behälterwandung (4) besitzen.

5. Tanksystem nach mindestens einem der vorhergehenden Ansprüche 1 bis 3, **dadurch gekennzeichnet, dass** die Elemente (13) eine geringere Dicke als die Behälterwandung (4) besitzen.

6. Tanksystem nach mindestens einem der vorhergehenden Ansprüche, **dadurch gekennzeichnet, dass** die Elemente (13) entlang des Durchmessers der Öffnung (6') eine Länge von 0,2 bis 0,9, vorzugsweise 0,4 bis 0,7 des Durchmessers besitzen.

7. Tanksystem nach mindestens einem der vorhergehenden Ansprüche, **dadurch gekennzeichnet, dass** die Elemente (13) mit Abstand zueinander angeordnet sind.

8. Tanksystem nach Anspruch 7, **dadurch gekennzeichnet, dass** die Breite des Abstands zwischen zwei Elementen (13) zwischen 1,0 und 0,05 der Breite eines Elements (13) beträgt.

9. Tanksystem nach Anspruch 7 oder 8, **dadurch gekennzeichnet, dass** der Abstand zwischen zwei Elementen (13) im Bereich (15) des Umfangs (16) der Öffnung (6') größer als der sich unmittelbar daran anschließende Bereich (17) des Abstandes ist.

10. Tanksystem nach mindestens einem der vorhergehenden Ansprüche, **dadurch gekennzeichnet, dass** ein bis zehn Elemente (13) an der zumindest einen Öffnung (6') angeordnet sind.

## Claims

1. Tank system for a reducing agent, comprising a container (1) for the reducing agent that has an upper container wall (2), lateral container walls (3) and a lower container wall (4), and comprising a conveying device (7) for providing the reducing agent such that it is able to be fed under pressure via an outlet (12) to an exhaust gas, wherein at least one opening (6, 6') is arranged in the lower container wall (4), wherein the at least one opening (6, 6') forms a connection to a further volume (V), which is filled with reducing agent, **characterized in that** at least one opening (6') has radially inwardly directed elastic elements (13) which are arranged on the periphery (16).

2. Tank system according to Claim 1, **characterized in that** the at least one opening (6') is an opening (6') arranged relatively close to the centre of the container (1).

3. Tank system according to Claim 1 or 2, **characterized in that** the elements (13) are formed in one piece with the container wall (4).

4. Tank system according to at least one of the preceding claims, **characterized in that** the elements (13) have the same thickness as the container wall (4).

5. Tank system according to at least one of the preceding Claims 1 to 3, **characterized in that** the elements (13) have a smaller thickness than the container wall (4).

6. Tank system according to at least one of the preceding claims, **characterized in that**, along the diameter of the opening (6'), the elements (13) have a length of 0.2 to 0.9, preferably 0.4 to 0.7, of the diameter.

7. Tank system according to at least one of the preceding claims, **characterized in that** the elements (13) are arranged with a spacing to one another.

8. Tank system according to Claim 7, **characterized in that** the width of the spacing between two elements (13) is between 1.0 and 0.05 of the width of an element (13).

9. Tank system according to Claim 7 or 8, **characterized in that** the spacing between two elements (13) is larger in the region (15) of the periphery (16) of the opening (6') than the directly adjoining region (17) of the spacing.

10. Tank system according to at least one of the preceding claims, **characterized in that** one to ten elements (13) are arranged on the at least one opening (6').

## Revendications

1. Système de réservoir d'un agent de réduction, comprenant un récipient (1) pour l'agent de réduction avec une paroi de récipient supérieure (2), des parois de récipient latérales (3) et une paroi de récipient inférieure (4), un dispositif de transport (7) pour fournir l'agent de réduction sous pression par le biais d'une sortie (12) de manière à pouvoir être acheminé à un gaz d'échappement, au moins une ouverture (6, 6') étant disposée dans la paroi de récipient inférieure (4), l'au moins une ouverture (6, 6') formant une liaison avec un volume supplémentaire (V) rempli d'agent de réduction, **caractérisé en ce qu'**au moins une ouverture (6') présente des éléments élastiques (13) disposés sur la périphérie (16) et orientés radialement vers l'intérieur.

2. Système de réservoir selon la revendication 1, **caractérisé en ce que** l'au moins une ouverture (6') est une ouverture (6') disposée plus près du centre du récipient (1).

3. Système de réservoir selon la revendication 1 ou 2, **caractérisé en ce que** les éléments (13) sont réalisés d'une seule pièce avec la paroi de récipient (4).

4. Système de réservoir selon au moins l'une quelconque des revendications précédentes, **caractérisé en ce que** les éléments (13) possèdent la même épaisseur que la paroi de récipient (4).

5. Système de réservoir selon au moins l'une quelconque des revendications 1 à 3, **caractérisé en ce que** les éléments (13) possèdent une plus faible épaisseur que la paroi de récipient (4) .

6. Système de réservoir selon au moins l'une quelconque des revendications précédentes, **caractérisé en ce que** les éléments (13) possèdent, le long du diamètre de l'ouverture (6'), une longueur de 0,2 à 0,9, de préférence de 0,4 à 0,7 fois le diamètre.

7. Système de réservoir selon au moins l'une quelconque des revendications précédentes, **caractérisé en ce que** les éléments (13) sont disposés à distance les uns des autres.

8. Système de réservoir selon la revendication 7, **caractérisé en ce que** la largeur de la distance entre deux éléments (13) est comprise entre 1,0 et 0,05 fois la largeur d'un élément (13).

9. Système de réservoir selon la revendication 7 ou 8, **caractérisé en ce que** la distance entre deux éléments (13) dans la région (15) de la périphérie (16) de l'ouverture (6') est supérieure à la région (17) de la distance s'y raccordant directement.

10. Système de réservoir selon au moins l'une quelconque des revendications précédentes, **caractérisé en ce qu'**un à dix éléments (13) sont disposés au niveau de l'au moins une ouverture (6').
